# EUROPEAN PATENT APPLICATION

(11) **EP 3 954 599 A2**
(43) Date of publication of application: **16.02.2022**
(21) Application number: 21190796.9
(22) Date of filing: 11.08.2021
(51) Int. Cl.: B62J 45/413, G01J 1/02, G01J 1/04, G01P 3/486

(54) **LIGHT SENSING MODULE**

(30) Priority: 11.08.2020 US 202063064134 P; 09.04.2021 US 202163173345 P
(71) Applicant: Amengine Corporation, Hsinchu 302 (TW)
(72) Inventor: Shen, Jian-Yu, 302 Hsinchu County (TW); Kang, Chia-Yu, 302 Hsinchu County (TW); Hsu, Chia-Liang, 302 Hsinchu County (TW); Sy, Nguyen Ba, 302 Hsinchu County (TW)
(74) Representative: Ter Meer Steinmeister & Partner

(57) **Abstract**

An embodiment of present application discloses a light sensing module for use with a reflector. The light sensing module includes a housing, an optical transceiver, and a shading hood. The housing includes a through hole. The optical transceiver includes a light source, a light sensor, and a separating wall. The light source is disposed in the housing for emitting a first light. The first light can pass through the housing via the through hole and be reflected as a second light by the reflector. The light sensor is disposed in the housing for receiving the second light. The separating wall is disposed between the light source and the light sensor. The shading hood is located at a position corresponding to the light sensor, and has an opening positioned in an optical path of the second light.

## Description

### CROSS-REFERENCES TO RELATED APPLICATIONS

This application claims priority of US Provisional Application Serial No. 63/064,134, filed on Aug 11, 2020, and US Provisional Application Serial No. 63/173,345, filed on Apr 09, 2021.

### BACKGROUND

### Technical Field

The present disclosure relates to a light sensing module, in particular to a light sensing module with a shading hood.

### Related Art

There are various sensors used in the life. Regarding the light sensing device for speed detection, in order to reduce the impact of ambient light on the sensing accuracy, the light sensing device is usually used in an enclosed area without ambient light. As a result, there is a problem of the restriction on the field of use is needed to be improved.

### SUMMARY

The problems of the related art are solved by the features of the independent claims. Advantageous embodiments are described in the respective dependent claims.

In the present disclosure, there is provided a light sensing module is used with a reflector. The light sensing module includes a housing, an optical transceiver, and a shading hood. The housing includes a through hole. The optical transceiver includes a light source, a light sensor, and a separating wall. The light source is disposed in the housing for emitting a first light. The first light can pass through the housing via the through hole, and be reflected as a second light by the reflector. The light sensor is disposed in the housing for receiving the second light. The separating wall is disposed between the light source and the light sensor. The shading hood is located at a position corresponding to the light sensor, and has an opening positioned in an optical path of the second light.

A light sensing module may be adapted to be utilized along with a reflector. The light sensing module may comprise a housing having a through hole.

The light sensing module may further comprise an optical transceiver that comprises a light source disposed in the housing to emit a first light, wherein the first light passes through the through hole of the housing and is reflected by the reflector to become a second light.

The optical transceiver may further comprise a light sensor disposed in the housing to receive the second light.

The optical transceiver may further comprise a separating wall between the light source and the light sensor.

The light sensing module may further comprise a shading hood disposed on the housing, wherein the shading hood has an opening, and the opening is in a light path of the second light.

The shading hood may comprise a first opening. The first opening may be located in a light path of the first light.

The shading hood may comprise a first guiding surface that surrounds the first opening. An extension direction of the first guiding surface may be parallel to a light path direction of the first light.

The shading hood may comprise a second guiding surface surrounding the opening. An extension direction of the second guiding surface may be parallel to a light path direction of the second light.

The optical transceiver may comprise a container. The light source and the light sensor may be disposed in the container.

The optical transceiver may comprise a sealing cap disposed on the container to close the container. The sealing cap may be made of a light transmissive material.

The sealing cap may be a lens.

The light sensing module may further comprise an optical filter between the light sensor and the opening.

A surface of the light sensor facing the opening may comprise an optical microstructure.

In the present disclosure there is also provided an light sensing module adapted to be disposed on a frame of a bicycle, wherein a rear wheel and a pedal of the bicycle respectively comprises a reflector. The light sensing module may comprise a housing disposed on the rack, wherein the housing has a through hole. The light sensing module may comprise a substrate disposed in the housing, wherein the substrate has a first side and a second side opposite to the first side, the first side faces the rear wheel, and the second side faces the pedal. The light sensing module may comprise two (optical) transceivers respectively connected to the first side and the second side of the substrate. Each of the (optical) transceivers may comprise a light source disposed in the housing to emit a first light, wherein the first light passes through the through hole of the housing and is reflected by the corresponding reflector to become a second light. Each of the (optical) transceivers may comprise a light sensor disposed in the housing to receive the second light. Each of the (optical) transceivers may comprise a separating wall between the light source and the light sensor. The light sensing module may comprise two shading hoods disposed on the housing, wherein each of the shading hoods has an opening, and the opening of each of the shading hoods is in a light path of the second light of the corresponding optical transceiver.

Each of the openings of the two shading hoods may comprise a first opening and a second opening, the first opening of each of the shading hoods may be in a light path of the first light of the corresponding optical transceiver, and the second opening of each of the shading hoods may be in the light path of the second light of the corresponding optical transceiver.

An angle may be between the optical transceiver disposed on the first side and the substrate. Preferably, the optical transceiver and the substrate are disposed in a manner that the first side and the substrate form an angle. The value of the angle is not zero, so the first side and the substrate are not parallel to each other.

The light sensing module may further comprise a sub-sensor and a control unit, wherein the sub-sensor and the control unit my be electrically connected to the substrate and electrically connected to the two optical transceivers, respectively, and the control unit may be configured to control the two optical transceivers to operate or not according to sensing of the sub-sensor.

The sub-sensor may be a magnetic sensor, a vibration sensor, or a motion sensor.

Each of the shading hoods may further comprise a first guiding surface surrounding the first opening. An extension direction of the first guiding surface may be parallel to a light path direction of the first light of the corresponding optical transceiver.

Each of the shading hoods may further comprise a second guiding surface surrounding the second opening, and an extension direction of the second guiding surface may be parallel to a light path direction of the second light of the corresponding optical transceiver.

Each of the optical transceivers may further comprise a container, and the light source and the light sensor may be disposed in the container.

Each of the optical transceivers may further comprise a sealing cap disposed on the container to close the container, and the sealing cap may be made of a light transmissive material.

The sealing cap may be a lens.

The light sensing module may further comprise an optical filter between the light sensor and the second opening of each of the optical transceivers.

As above, according to one or some embodiments of the present disclosure, with the separating wall and the shading hood, ambient noises can be reduced and the detection accuracy can be further improved.

### BRIEF DESCRIPTION OF THE DRAWINGS

The disclosure will become more fully understood from the detailed description given herein below for illustration only, and thus not limitative of the disclosure, wherein:
FIG. 1 is a schematic view of a light sensing module according to an embodiment of the present disclosure;
FIG. 2 is a schematic view of a light sensing module according to another embodiment of the present disclosure;
FIG. 3 is a schematic view of a shading hood utilized along with an optical transceiver according to an embodiment of the present disclosure;
FIG. 4 is a schematic view of a shading hood utilized along with an optical transceiver according to another embodiment of the present disclosure;
FIG. 5 is a schematic view of a light sensing module according to another embodiment of the present disclosure;
FIG. 6 is a schematic view of a light sensing module according to another embodiment of the present disclosure;
FIG. 7 is a schematic view of a light sensing module according to another embodiment of the present disclosure;
FIG. 8 is a schematic view of an optical transceiver with a sealing cap according to an embodiment of the present disclosure;
FIG. 9 is a schematic view of an optical transceiver with an optical microstructure according to an embodiment of the present disclosure;
FIG. 10 is a schematic view of an optical transceiver with a filter according to an embodiment of the present disclosure;
FIG. 11 is a schematic view of an optical transceiver with an optical microstructure and a filter according to an embodiment of the present disclosure;
FIG. 12 is a schematic view (1) of a light sensing module applied to a bicycle according to an embodiment of the present disclosure;
FIG. 13 is a schematic view (2) of a light sensing module applied to a bicycle according to an embodiment of the present disclosure;
FIG. 14 is a schematic view of a reflector utilized along with a light sensing module according to an embodiment of the present disclosure;
FIG. 15 is a schematic view of a light sensing module according to another embodiment of the present disclosure;
FIG. 16 is a schematic view of a light sensing module according to another embodiment of the present disclosure;
FIG. 17 is a functional block diagram of a light sensing module according to an embodiment of the present disclosure;
FIG. 18 is an operating flowchart of a light sensing module according to an embodiment of the present disclosure;
FIGS. 19A~19D illustrate graphs showing the signal changes of a light sensing module according to an embodiment of the present disclosure;
FIG. 20 is a flowchart of a control unit for controlling the current of the light source according to an embodiment of the present disclosure;
FIG. 21 is a schematic view of a light sensing module applied to a bicycle according to an embodiment of the present disclosure;
FIG. 22 is an enlarged partial view of the enclosed portion 22 shown in FIG. 21.

### DETAILED DESCRIPTION

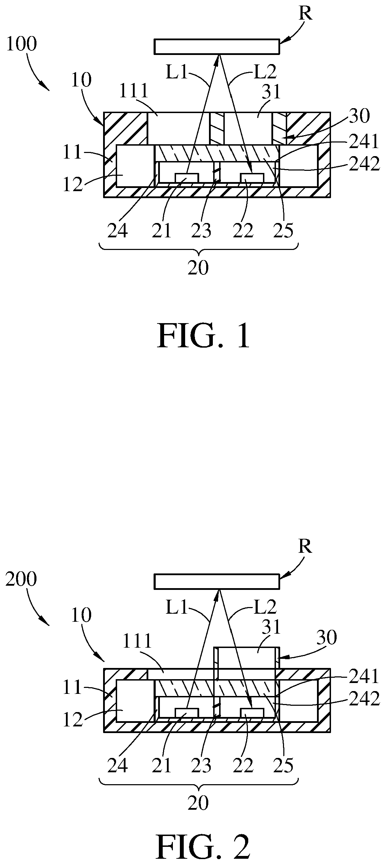

FIG. 1 shows a schematic view of a light sensing module 100 according to an embodiment of the present disclosure. The light sensing module 100 is utilized along with a reflector R to detect the speed of an object. In one embodiment, the object is capable of performing circular motions or reciprocating motions, and the object can be a wheel, a pedal of a bicycle, or an exercise bike.

Please refer to FIG. 1. The light sensing module 100 includes a housing 10, an optical transceiver 20, and a shading hood 30. The housing 10 is made of an opaque material. The optical transceiver 20 at least includes a light source 21 and a light sensor 22. The light source 21 and the light sensor 22 are disposed in the housing 10 which can reduce the influence of ambient light. The shading hood 30 may also be referred to as cover or cap. The shading hood 30 is located at a position corresponding to the optical transceiver 20 and has a side surface enclosed by the housing 10. Therefore, the noise influence can be reduced and the performance of the optical transceiver 20 can be enhanced.

The housing 10 is a hollow structure having a wall surface 11 and an accommodating space 12. In one embodiment, the housing 10 has a through hole 111 , and the optical transceiver 20 can transmit and receive light through/from the through hole 111. The wall surface 11 of the housing 10 is made of an opaque material which can prevent the ambient light from passing through the housing 10 from the wall surface 11 to affect the sensing accuracy of the optical transceiver 20.

The light source 21 of the optical transceiver 20, in one embodiment, is preferably a directional light source having a concentrated light energy, such as a light emitting diode (LED) or a laser diode. Accordingly, the light energy of the light emitted from the light source 21 can be concentrated and utilized sufficiently. In one embodiment, the view angle of FWHM (Full Width Half Maximum) of the light source 21 is not greater than 150 degrees, in some embodiments, not greater than 120 degrees. In one embodiment, the light source 21 emits a first light L1. The first light L1 is reflected by the reflector R to generate a second light L2, and the second light L2 is received by the light sensor 22.

The light sensor 22 is capable of converting light energy into other kinds of signals. In one embodiment, the light sensor 22 is capable of converting light energy into electrical signals. Specifically, in one embodiment, the light sensor 22 is a photodiode, but the present disclosure is not limited thereto.

Please refer to FIG. 1. In order to prevent an interference from happening between the first light L1 emitted from the light source 21 and the second light L2 received by the light sensor 22 in the housing 10, a separating wall 23 is arranged between the light source 21 and the light sensor 22. The separating wall 23 herein is opaque to make the light sensor 22 to receive the second light L2, but not the first light L1, and keep the detection accuracy of the light sensor 22.

In one embodiment, the shading hood 30 can be a separate structure which is assembled with the wall surface 11 of the housing 10. In another embodiment, the shading hood 30 can be integrally formed with the housing 10, while the present application is not limited thereto.

The detection accuracy of the light sensing module 100 depends on the way that the light sensor 22 senses the second light L2. In one embodiment, the shading hood 30 is located only in the light path of the second light L2, and the first light L1 can directly emit outward from the through hole 111 of the housing 10. In another embodiment (not shown), the shading hood 30 is located above the light source 21 and the light sensor 22.

In an embodiment, the shading hood 30 and the housing 10 are integrally formed as a one-piece object, and the through hole 111 is located at a position corresponding to the optical transceiver 20. The first light L1 emitted from the light source 21 can pass through the through hole 111 of the housing 10 and have a portion moving toward the reflector R. In one embodiment, the shading hood 30 is a part of the housing 10. The shading hood 30 has an opening 31 located a position corresponding to the light sensor 22 for guiding the lights heading to the light sensor 21. With the shading hood 30, the ambient lights other than the second light L2 can be prevented from entering into the light sensor 22. The light sensor 22 therefore has an improved accuracy of detecting the second light L2.

In an embodiment, the shading hood 30 is a separate structure, the housing 10 has a through hole 111, and the shading hood 30 is inserted into the through hole 111. In one embodiment, the shape and the size of the shading hood 30 match the shapes and the sizes of the through hole 111 and the light sensor 22. Accordingly, the shading hood 30 can be assembled with the through hole 111 in interference fit or via glue.

Please refer to FIG. 1. In one embodiment, the optical transceiver 20 of the light sensing modules 100 is a package and includes a container 24 and a sealing cap 25. The container 24 has an opening 241 and a space 242. The sealing cap 25 covers the opening 241 of the container 24 to seal the space 242. The light source 21, the light sensor 22, and the separating wall 23 are disposed in the space 242 of the container 24. In the form of package, the optical transceiver 20 is advantage to subsequent processing and assembly.

In one embodiment, the container 24 and the separating wall 23 of the optical transceiver 20 can be made of a material capable of reflecting lights, which can increase the light intensity in the container 24 of the optical transceiver 20, and enhance the signal-to-noise ratio of the light sensor 22. In another embodiment, the light source 21 and the light sensor 22 are directly disposed in the housing 10 and not encapsulated in the container 24. The housing 10 is made of a material capable of reflecting lights, which can increase the light intensity in the housing 10, and enhance the signal-to-noise ratio of the light sensor 22.

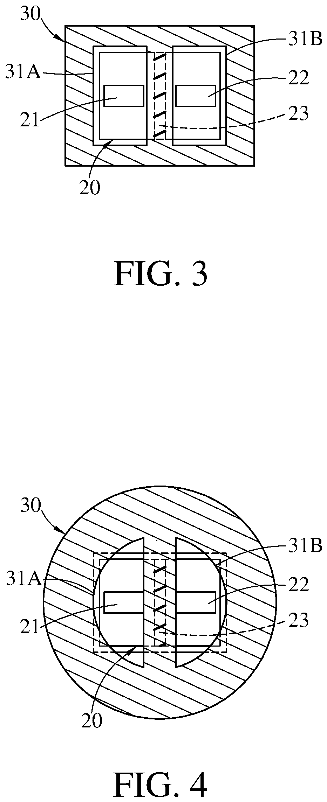

FIG. 3 is a schematic view of a shading hood 30 according to an embodiment of the present disclosure. FIG. 4 is a schematic view of a shading hood 30 according to another embodiment of the present disclosure. In FIG. 3 and FIG. 4, only the shading hood 30 and the optical transceiver 20 are shown for describing the structures and relationship of these two components.

FIG. 2 is a schematic view of a light sensing module 200 according to another embodiment of the present disclosure. In one embodiment, the shading hood 30 is a separate structure disposed on a position corresponding to the through hole 111 of an outer surface of the housing 10. The surface of the shading hood 30 is connected to the outer surface of the housing 10, and the shading hood 30 protrudes out of the housing 10 to expel more ambient light other than second light L2. In one embodiment, the shape and the size of the shading hood 30 is not limited to stick to those of the through hole 111, thereby the manufacturing difficulties of the shading hood 30 can be reduced. In one embodiment, the shading hood 30 and the housing 10 are made of opaque material(s), the opaque material includes metal or plastic. The metal includes stainless steel, magnesium alloy, aluminum alloy, titanium, iron, aluminum, copper, chrome-plated metal, etc. The plastic includes polymer or resin, such as thermoplastic plastic material or thermosetting plastic material. The thermoplastic plastic material includes polyphthalamide (PPA), polycyclohexylenedimethylene terephthalate (PCT), acrylonitrile butadiene styrene (ABS), polyetheretherketone (PEEK), or other suitable materials. The thermosetting plastic material includes epoxy molding compound (EMC), silicone molding compound (SMC), or other suitable materials. Optionally, the material of the housing 10 and the separating wall 23 also includes an opaque material for blocking light, which can further reduce the interference to the light source 21 and the light sensor 22. The opaque material can be a light-absorbing material or a light-reflecting material.

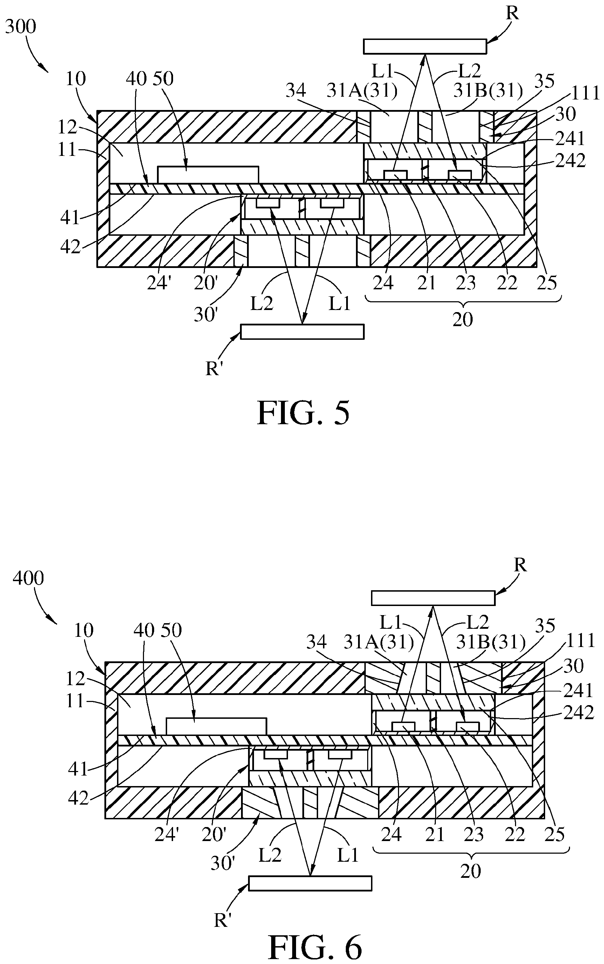

In another embodiment, the shading hood 30 is located on the light-emitting surface of the optical transceiver 20 so as to guide the first light L1 and the second light L2, as shown in the upper portion of FIG. 5. Accordingly, the first light L1 emitted from the light source 21 can be transmitted to the reflector R with less loss and the optical transceiver 20 has an improved sensing accuracy of the second light L2.

The shape of the through hole 111 of the housing 10 includes but not limited to circle, rectangle, square, or other shapes. FIG. 3 and FIG. 4 are top views of the shading hoods 30 according to different embodiments and show the relative positions of the shading hood 30 and the optical transceiver 20. The shading hood 30 and the through hole 111 have corresponding shapes. The shape of the shading hood 30 shown in FIG. 3 is a rectangle. The shape of the shading hood 30 shown in FIG. 4 is a circle. Moreover, the shape of the openings 31A/31B (opening 31A may be referred to as "opening" whereas opening 31B may be referred to as "first opening") of the shading hood 30 includes also not limited to circle, rectangle, square, or other shapes. The shape of the openings 31A/31B of the shading hood 30 shown in FIG. 3 is a rectangle, and the shape of the openings 31A/31B of the shading hood 30 shown in FIG. 4 is a semicircle.

Please refer to FIG. 1. The reflector R is disposed above the light sensing module 100 by a distance greater than zero. The light sensing module 100 and the reflector R are disposed on a fixed portion and a moving portion, respectively. The fixed portion is a portion seldom changing its position in the testing environment. The moving portion is a portion continuously or intermittently changing its position in the testing environment. However, the light sensing module 100 or the reflector R is not limited to be placed on the positions mentioned above. In another embodiment, the light sensing module 100 is disposed on the moving portion, and the reflector R is disposed on the fixed portion.

The reflector R has a reflecting surface capable of reflecting lights. The reflecting surface includes but not limited to a smooth plane, a curved surface, a paraboloidal surface, or a hemispherical surface. In some embodiments, the reflector R is made of a material with low transmittance and high reflectivity. Alternatively, in one embodiment, a light-reflecting film with low transmittance and high reflectivity is disposed on the surface of the reflector R, but it is not limited thereto. In the following paragraphs, the operation of the light sensing module 100 is described in detail.

In one embodiment, the light sensing module 100 is disposed on the fixed portion, and the reflector R is disposed on the moving portion in a circular motion or a reciprocating motion. In detail, when the moving portion is moved, the reflector R can be moved to a position corresponding to the light sensing module 100 to receive the first light L1. When the light sensing module 100 operates, the light source 21 of the optical transceiver 20 emits the first light L1, the first light L1 passes through the through hole 11 and is emitted out from the housing 10 toward the reflector R. The first light L1 can be reflected as a second light L2 by the reflector R which appears periodically. The second light L2 is emitted into the housing 10 through the opening 31 of the shading hood 30 and is received by the light sensor 22. Since the reflector R is disposed on an object which has a circular motion or a reciprocating motion. Each and every circular motion or reciprocating motion of the object can produce one shot of second light L2. Accordingly, the light sensor 22 can calculate the speed of the circular motion or the reciprocating motion of the object according to the frequency of the received second lights L2.

In one embodiment, the light sensor 22 is a photodiode, and the electrical signal of the light sensor 22 changes when the light sensor receives light energy. Therefore, with the frequency change of the electrical signal, the speed of the circular motion and the reciprocating motion of the object can be calculated.

The sensing performance of the light sensor 22 is based on the quality of the received light energy. Therefore, reducing the energy loss of the second light L2 in the light travel process, and reducing the interferences between the ambient light and the second light L2 are beneficial to increase the detection accuracy. In some embodiments, the shape or the size of the opening 31 of the shading hood 30 is preferably determined according to the light path and the light field of the first light L1 and the second light L2.

Please refer to FIG. 5. FIG. 5 is a schematic view of a light sensing module 300 according to another embodiment of the present disclosure. Here, the upper portion of the light sensing module 300 is described first. The shading hood 30 of the light sensing module 300 has two openings which are a first opening 31A and a second opening 31B (the second opening 31B may refer to the opening 31 of Figs. 1 and 2). The shading hood 30 is fixed on the wall surface 11 of the housing 10 and at a position of the housing 10 corresponding to the light source 21 and the light sensor 22. Therefore, the shading hood 30 guides the first light L1 emitted from the light source 21 and the second light L2 toward the light sensor 22. The first opening 31A is provided for a transmission of the first light L1 emitted by the light source 21, and the second opening 31B is provided for entering the second light L2 into the light sensor 22. The first opening 31A is located in the light path of the first light L1. The first light L1 is reflected by the reflector R to generate the second light L2, and the second opening 31B is located in the light path of the second light L2. Accordingly, the light transmission efficiency and the light receiving efficiency of the light source 21 and the light sensor 22 can be increased.

Specifically, in one or some embodiments, the shape and the size of the first opening 31A are determined according to the beam shape and the beam diameter of the first light L1. The second light L2 is the reflected light of the first light L1. The second and the first lights therefore have different angles of incidence. However, the shape of the light beam of the second light L2 is same as the first light L1. Therefore, the shape and the size of the second opening 31B are also determined according to the beam shape and the beam diameter of the first light L1.

In one embodiment, the sizes of the first opening 31A and the second opening 31B are, preferably, not less than the beam diameter of the first light L1. Furthermore, the first light L1 emitted from the light source 21 and moving toward the reflector R has an incident angle. Different light sources 21 can generate lights to pass through the first opening 31A and impinging the reflector R at different incident angles. Therefore, the position and the shape of the first opening 31A and the second opening 31B can affect the light transmission and light receiving performance of the lights. Accordingly, it is better to consider the beam shape, the beam size, and the incident angle impinging on the reflector R to determine the sizes and the arrangement of the first opening 31A and the second opening 31B of the shading hood 30.

Please refer to FIG. 5. The shading hood 30 includes a first guiding surface 34 and a second guiding surface 35. The first guiding surface 34 surrounds the first opening 31A, and the second guiding surface 35 surrounds the second opening 31B.

The first light L1 emitted from the light source 21 has a first light path, and the first light path is not parallel to the first guiding surface 34. The size and the shape of the first opening 31A is arranged to cover the first light path of the first light L1, so that the first light L1 can move toward the reflector R through the first opening 31A without obstacle. The size of the first opening 31A is greater than the beam diameter of the first light L1. Similarly, the size of the second opening 31B is greater than the beam diameter of the second light L2. Therefore, the first light L1 can be prevented from being blocked to reduce its light intensity and impact following detection when the first light L1 moves through the first opening 31A.

Please refer to FIG. 5. The light sensing module 300 includes a housing 10, a substrate 40, two optical transceivers 20, 20′, and two shading hoods 30, 30′. The substrate 40 is disposed in the accommodating space 12 of the housing 10 and has a first side 41 and a second side 42 opposite to the first side 41. The optical transceiver 20 is disposed on the first side 41, and the optical transceiver 20′ is disposed on the second side 42. The shading hood 30 is disposed at a position corresponding to the optical transceiver 20 of the housing 10, and the shading hood 30′ is disposed at a position corresponding to the optical transceiver 30′ of the housing 10. The reflector R is disposed on one side corresponding to the optical transceiver 20, and the reflector R′ is disposed on another side corresponding to the optical transceiver 20′. The optical transceiver 20 and the optical transceiver 20' respectively emit the first lights L1 in two opposite directions, and the first lights L1 are respectively reflected by the reflectors R, R′ to generate the second lights L2 which would be detected by the optical transceivers 20, 20′, respectively. Therefore, the light sensing module 300 can measure the speed of the circular motion or reciprocating motions in two directions. In one embodiment, the optical transceiver 20 and the optical transceiver 20′ have identical or similar structures, and the shading hood 30 and the shading hood 30' have identical or similar structures.

Please refer to FIG. 5. The light sensing module 300 includes a power module 50. The power module 50 is disposed on the substrate 40 (the first side 41 or the second side 42). Optionally, an input/output (I/O) port (not shown) may be disposed on the substrate 40, and the input/output port is electrically connected to the power module 50 and extends out of the housing 10. Therefore, a user can charge the power module 50 through the input/output port. Optionally, in order to ensure the waterproof, a waterproof cap (not shown) can be disposed on the housing 10 to encapsulate the input/output port and thus ensuring that the entire light sensing module 300 is waterproofed.

In another embodiment, in order to provide a higher waterproof rating to the light sensing module, the light sensing module 300 can include a wireless charging module (not shown). The wireless charging module is disposed in the housing 10 and electrically connected to the power module 50, and the power module 50 is charged by the wireless charging module through the wireless charging technologies. Accordingly, in one embodiment, the input/output port is not required to pass through the housing 10 for charging, thus the waterproof level of the light sensing module 300 is improved.

FIG. 6 illustrates a schematic view of a light sensing module 400 according to another embodiment of the present disclosure. The light sensing module 400 is similar to the light sensing module 300 and has two optical transceivers 20, 20' facing two opposite directions for measuring speed of the circular motion or reciprocating motion in two opposite directions. In FIG. 5, the first guiding surface 34 and the second guiding surface 35 of the shading hood 30 are not parallel to the first light L1 and the second light L2. As shown in FIG. 6, the shading hood 30 on the first side 41 of the substrate 40 is taken as an example, the first guiding surface 34 has a portion (for example, the left inner surface of the first guiding surface 34) extending in a direction parallel to the light path of the first light L1, and the second guiding surface 35 has a portion (for example, the right inner surface of the second guiding surface 35) extending in a direction parallel to the light path of the second light L2. In one embodiment, the size of the first opening 31A is reduced to approach the light path of the first light L1, and the size of the second opening 31B is reduced to approach the light path of the second light L2. Therefore, the first light L1 emitted from the light source 21 can move toward the reflector R without being blocked by the shading hood 30, and the second light L2 reflected from the reflector R can move toward the light sensor 22 without being blocked by the shading hood 30. To further decreasing the ambient light noise entering into the light sensor 22, the sizes of the first opening 31A and the second opening 31B can be slightly reduced to respectively approach the light moving directions of the first light L1 and the second light L2. In the embodiment as shown in FIG. 6, the first guiding surface 34 of the shading hood 30 has a portion close to the second opening 31B and perpendicular to the upper surface of the housing 10, and another portion facing to the wall surface 11 and parallel to the light moving direction of the first light L1. Likewise, the second guiding surface 35 of the shading hood 30 has a portion close to the first opening 31A and perpendicular to the upper surface of the housing 10, and another portion facing to the wall surface 11 and parallel to the light moving direction of the second light L2. However, it is understood that, embodiments are not limited thereto.

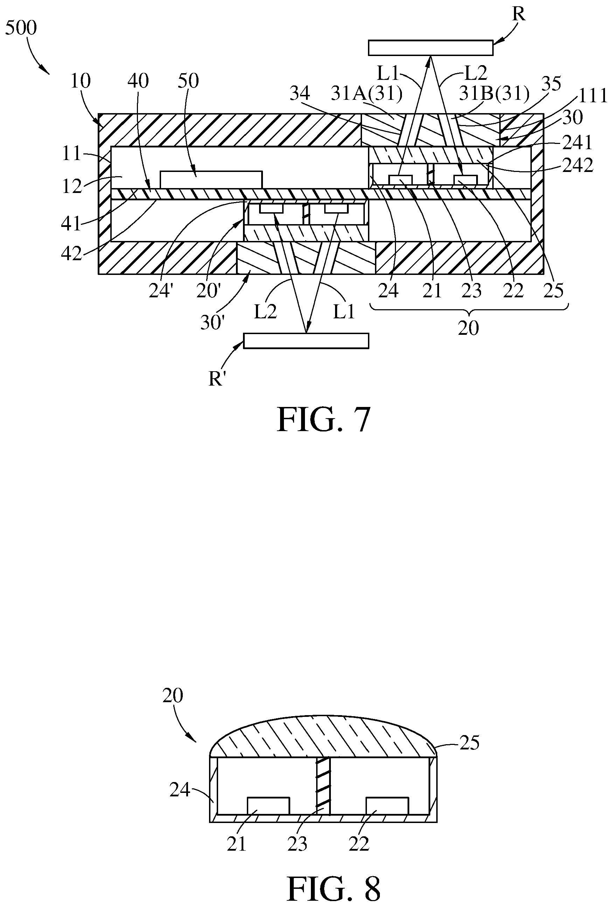

FIG. 7 is a schematic view of a light sensing module 500 according to another embodiment of the present disclosure. The light sensing module 500 is similar to the light sensing module 300 and has two optical transceivers 20, 20' facing two opposite directions for measuring speed of the circular motion or reciprocating motion in two directions. Taking the shading hood 30 on the first side 41 of the substrate 40 as an example, all of the first guiding surface 34 is parallel to the light moving direction of the first light L1, and all of the second guiding surface 35 is parallel to the light moving direction of the second light L2. The extending directions of the first guiding surface 34 and the second guiding surface 35 can be determined in advance according to the viewing angle of the light from light source 21 and the position of the reflector R. According to the principle of light reflection, the light moving toward the reflector R has an incident angle with respect to the reflector R, and a reflected angle equal to the incident angle corresponding to the reflector R. Hence, the arrangement of the first guiding surface 34 and the second guiding surface 35 can be determined according to the locations of the reflector R, the light source 21, and the light sensor 22. In one embodiment, provided the first light L1 passes through the first opening 31A, the first light L1 can move toward the reflector R without being blocked by the shading hood 30. Provided the second light L2 passes through the second opening 31B, the second light L2 can move toward the light sensor 22 without being blocked by the shading hood 30. Therefore, the shape and the size of the first opening 31A can approach to the light moving direction and the beam diameter of the first light L1, and the shape and the size of the second opening 31B can approach to the light moving direction and the beam diameter of the second light L2. Accordingly, only lights with patterns approaching to the second light L2 can pass through the second opening 31B and move toward the light sensor 22. Hence, the ambient light is reduced to receive by the light sensor 22, and the detection accuracy of the light sensor 22 for detecting the second light L2 can be enhanced.

In another embodiment, as shown in FIG. 8, the sealing cap 25 of the optical transceiver 20 is a lens. Referring to FIG. 1, the first light L1 emitted from the light source 21 of the optical transceiver 20 passes through the sealing cap 25 and moves forward to the through hole 111. The second light L2 reflected by the reflector R passes through the sealing cap 25 via the opening 31 of the shading hood 30 and is received by the light sensor 22. Accordingly, in FIG. 8, the first light L1 can be concentrated by the sealing cap 25 of lens configuration and move toward the reflector R. The second light L2 can be concentrated by the sealing cap 25 of lens configuration and received by the light sensor 22. Therefore, both the light intensities of the lights transmitted from or received by the optical transceiver 20 can be enhanced, thereby increasing the signal-to-noise ratio.

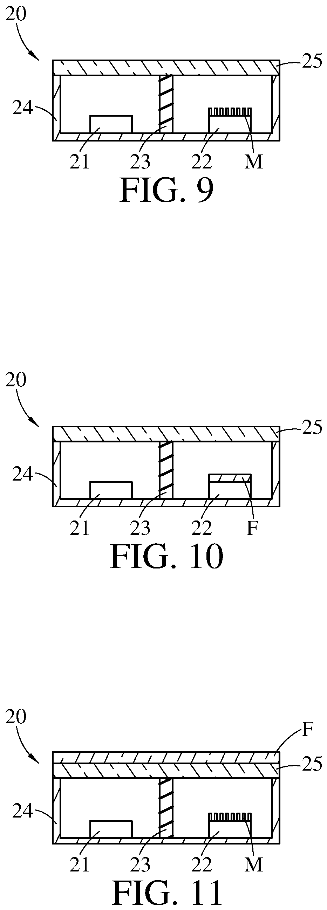

In another embodiment, in order to enhance the signal-to-noise ratio, an optical microstructure M can be disposed on the surface of the light sensor 22 of the optical transceiver 20. FIG. 9 is a schematic view of an optical transceiver 20 with an optical microstructure M according to an embodiment of the present disclosure. In one embodiment, an optical microstructure M is disposed on a surface of the light sensor 22 facing the sealing cap 25. The optical microstructure M includes but not limited to a grid structure or a grille structure. The optical microstructure M can filter ambient light with larger incident angles, thereby the impact of the ambient light on the light sensor 22 can be reduced.

In another embodiment, in order to enhance the signal-to-noise ratio, an optical filter F can be disposed on the surface of the light sensor 22 of the optical transceiver 20. FIG. 10 is a schematic view of an optical transceiver 20 with an optical filter F according to an embodiment of the present disclosure. In one embodiment, an optical filter F is disposed on the surface of the light sensor 22 facing the sealing cap 25. The optical filter F can filter out ambient light with wavelength which is different from the wavelength of the light emitted from the light source 21, thereby the impact of the ambient light on the light sensor 22 can be reduced.

In another embodiment, in order to enhance the signal-to-noise ratio, both of the optical microstructure M and the optical filter F can be disposed on the optical transceiver 20. FIG. 11 is a schematic view of an optical transceiver 20 with an optical microstructure M and an optical filter F according to an embodiment of the present disclosure. In one embodiment, an optical microstructure M is disposed on the surface of the light sensor 22 facing the sealing cap 25 , and an optical filter F is disposed on the surface of the sealing cap 25 facing the reflector R. Accordingly, the lights entering into the light sensor 22 of the optical transceiver 20 can be filtered out by the optical filter F and the optical microstructure M, thereby the impact of the stray lights on the light sensor 22 can be reduced.

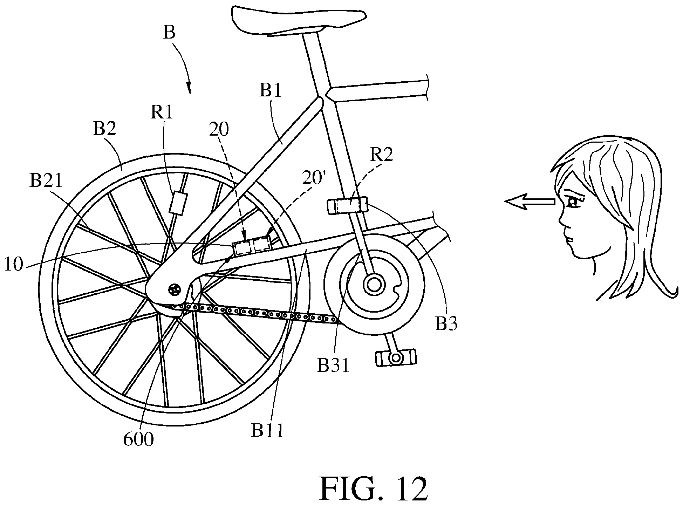

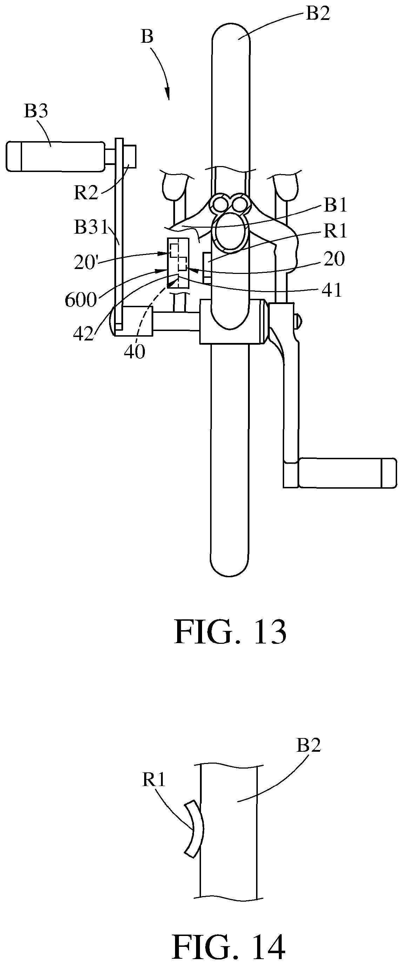

FIG. 12 and FIG. 13 show schematic views (1) and (2) of a light sensing module 600 applied to a bicycle B according to an embodiment of the present disclosure. FIG. 13 is a schematic view taken along an arrow shown in FIG. 12. In one embodiment, the bicycle B includes a frame B1, a rear wheel B2, and a pedal B3. The rear wheel B2 is disposed on one side of the chain stay B11 of the frame B1. The pedal B3 is connected to the frame B1 through the crank B31 and can pass by the other side of the chain stay B11 during the rotation of the pedal B3. The light sensing module 600 has two optical transceivers facing two opposite directions for measuring speed of the circular motions or reciprocating motions in two directions. The light sensing module 600 can be aforementioned light sensing modules 300-500. The light sensing module 600 is fixed on the chain stay B11 of the bicycle B1, and a first reflector R1 is disposed on the spoke B21 of the rear wheel B2. A second reflector R2 is disposed on the crank B31 connected to the pedal B3. Accordingly, the light sensing module 600 can be used with the first reflector R1 and the second reflector R2 to detect the wheel speed of the rear wheel B2 and the pedaling rate of the pedal B3 of the bicycle B.

Please refer to FIG. 12 and FIG. 13 as well as FIG. 5 to FIG. 7. The housing 10 of the light sensing module 600 is fixed on the chain stay B11. The first side 41 of the substrate 40 of the light sensing module 600 faces the rear wheel B2. When the pedal B3 rotates and passes by the light sensing module 600, the second side 42 of the substrate 40 faces the pedal B3.

In one embodiment, the two optical transceivers 20, 20' are respectively fixed on the first side 41 and the second side 42 of the substrate 40, so that the light sources and the light sensors of the two optical transceivers 20, 20' respectively face opposite directions. The optical transceiver 20 and the first reflector R1 are used to measure the wheel speed of the rear wheel B2.The optical transceiver 20' and the second reflector R2 are used to measure the pedaling rate of the pedal B3. Accordingly, in one embodiment, the wheel speed and the pedaling rate can be measured by a single light sensing module 600, thus the accessibility is improved.

In one embodiment, the wavelength of the first light L1 emitted from the light source 21 is 940 nm, but embodiments are not limited thereto. The light source 21 can generate a pulse signal with a duty circle not less than 50 Hz, and preferably greater than 100Hz. In each period of the pulse signal, the duration of one light pulse of the light source 21 is not less than 55 microseconds, and preferably is 95 microseconds.

Please refer to FIG. 12 and FIG. 13. The distance between the light sensing module 600 and the rear wheel B2 is in a range of about 1 cm to 5 cm. The distance between the light sensing module 600 and the pedal B3 is less than the distance between the light sensing module 600 and the rear wheel B2. In another embodiment, the distance between the light sensing module 600 and the pedal B3 is greater than the distance between the light sensing module 600 and the rear wheel B2. FIG. 14 is a schematic view of a reflector R1 used along with a light sensing module 600 according to an embodiment of the present disclosure. In one embodiment, the first reflector R1 has a paraboloidal surface with a curvature radius of 3~4 mm. The second reflector R2 has a configuration identical with the first reflector R1 and a repetitious description is omitted here.

Accordingly, the light sensing module 600 can measure the wheel speed and the pedaling rate of the bicycle B to provide the rider multiple sensing results. Therefore, according to the multiple sensing results, the rider can adjust his/her paces, riding speed, or riding status.

In one embodiment, the light sensing module 600 can be powered by electricity converted from the mechanical power of the wheel or the pedal, but embodiments are not limited thereto.

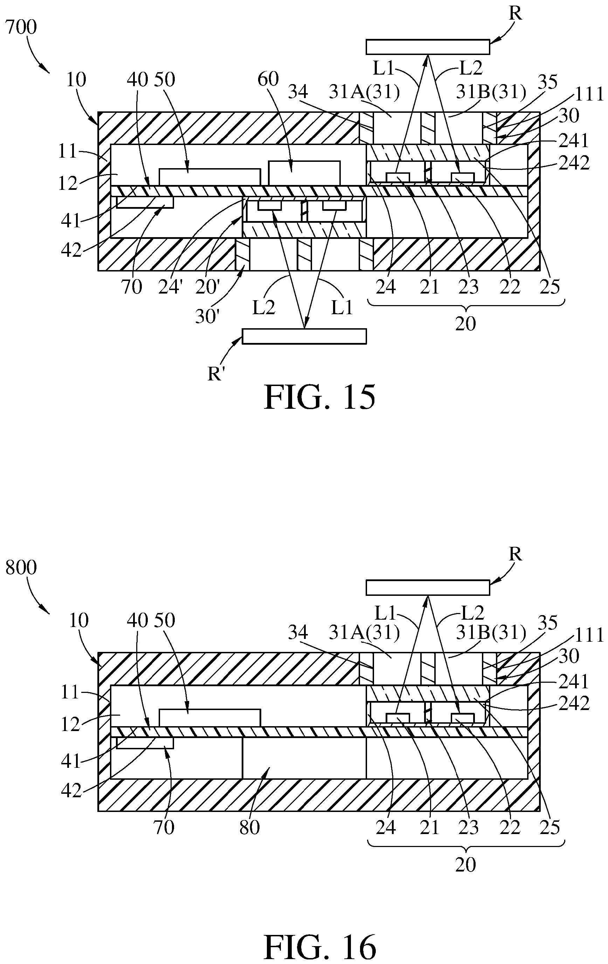

FIG. 15 is a schematic view of a light sensing module 700 according to another embodiment of the present disclosure. The light sensing module 700 is similar to the light sensing module 300 and has two optical transceivers 20, 20' facing two opposite directions for measuring the speed of the circular motions or reciprocating motion in two directions. In one embodiment, the light sensing module 700 further includes a sub-sensor 60 and a control unit 70 electrically connected to the substrate 40. The control unit 70 is electrically connected to each of the optical transceiver 20, the optical transceiver 20', and the sub-sensor 60. When the light sensing module 700 is utilized in the foregoing bicycle B, the sub-sensor 60 is provided for detecting the riding speed (moving speed) of the bicycle B, the wheel speed of the rear wheel B2, or the pedaling rate of the pedal B3. In one embodiment, the control unit 70 can control the turn-on or turn-off of the optical transceiver 20 and the optical transceiver 20' according to the sensing results of the sub-sensor 60.

Specifically, in one embodiment, when the sub-sensor 60 detects the moving speed of the bicycle B, the wheel speed of the rear wheel B2, or the pedaling rate of the pedal B3 is decreased close to zero within a predetermined time, the control unit 70 determines that the bicycle B is in a non-moving state. Accordingly, the control unit 70 can switch off the optical transceiver 20 and the optical transceiver 20' or turn them into a sleeping mode. When the sub-sensor 60 detects the moving speed of the bicycle B, the wheel speed of the rear wheel B2, or the pedaling rate of the pedal B3 is higher than a predetermined value, the control unit 70 determines that the bicycle B starts the riding and is in a moving state. Accordingly, the control unit 70 can switch on the optical transceiver 20 and the optical transceiver 20' in and turn them into an operation mode. Therefore, when the bicycle B is not in the moving state, the light sources 21 of the optical transceivers 20, 20' can be turned off or in a sleeping mode, thereby the power consumption of the optical transceiver 20 can be improved. It is understood that, in one embodiment, the power consumption of the sub-sensor 60 is less than those of the optical transceivers 20, 20', and the sub-sensor 60 includes but not limited to a vibration sensor, a magnetic sensor, or a motion sensor.

In one embodiment, the control unit 70 includes but not limited to a central processing unit (CPU), digital signal processors (DSP), programmable controllers, application specific integrated circuits (ASIC), graphic processing units (GPU), other microprocessors that are programmable for general-purposes or specific-purposes, other similar components, or any combination of the foregoing components.

FIG. 16 is a schematic view of a light sensing module 800 according to another embodiment of the present disclosure. The light sensing module 800 has two sensors facing two opposite directions for measuring speed of the circular motion or reciprocating motion in two directions. In one embodiment, the light sensing module 800 includes at least one optical transceiver 20 facing one direction. Specifically, in one embodiment, the optical transceiver 20 is disposed on one of the sides of the substrate 40 (e.g., the first side 41), and other physical sensor can be disposed on the other side of the substrate 40 (e.g., the second side 42). Accordingly, the light sensing module 800 has a hybrid sensing configuration. The physical sensor includes a vibration sensor, a motion sensor, or the magnetic sensor.

Please refer to FIG. 16 and FIG. 12. The optical transceiver 20 is disposed on the first side 41 of the substrate 40 of the light sensing module 800, and a magnetic sensor 80 is disposed on the second side 42 of the substrate 40. When the light sensing module 800 is applied to the foregoing bicycle B, the optical transceiver 20 can be operated with the reflector R1 on the spoke B21 of the rear wheel B2 to bring out optical sensing. In one embodiment, a magnetic member (not shown) is disposed on the crank B31 of the pedal B3 for being magnetically reacted with the magnetic sensor 80. Therefore, the wheel speed of the bicycle B can be detected by the optical sensing of the optical transceiver 20, and the pedaling rate of the bicycle B can be detected by the magnetic reaction of the magnetic sensor 80. Accordingly, in one embodiment, one optical transceiver 20 can be removed from the light sensing module 800, and the number of the optical transceiver 20 can be reduced. The power consumption of the light sensing module 800 is lowered to meet different application requirements.

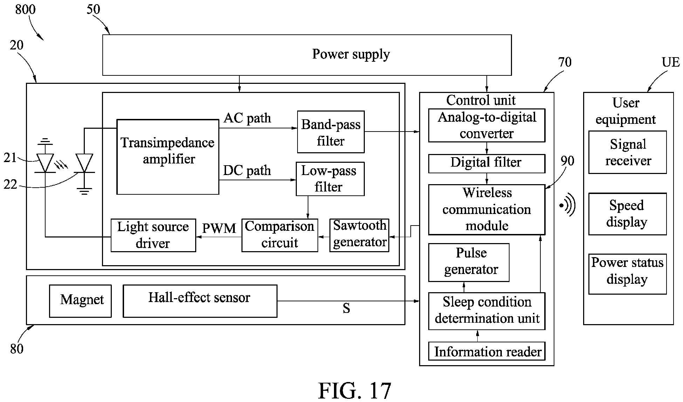

FIG. 17 illustrates a functional block diagram of a light sensing module 800 according to another embodiment of the present disclosure. The light sensing module 800 includes an optical transceiver 20, the control unit 70, and the magnetic sensor 80. The magnetic sensor 80 is a Hall-effect sensor and is capable of detecting magnetic signals to generate a hall-effect sensor signal S. The control unit 70 may include a wireless communication module 90. In another embodiment, the wireless communication module 90 can be separately disposed on the substrate 40 and electrically connected to the control unit 70. The wireless communication module 90 can be wirelessly connected to a user equipment UE and transmits the sensing result to the user equipment UE. The wireless communication module 90 can include a signal transmission component which is applicable to global system for mobile communication (GSM), personal handy-phone system (PHS), code division multiple access (CDMA) system, wideband code division multiple access (WCDMA) system, long term evolution (LTE) system, worldwide interoperability for microwave access (WiMAX) system, wireless fidelity (Wi-Fi) system, or Bluetooth.

The user equipment UE includes but not limited to a mobile communication device, a wearable device, or a display. In one embodiment, the user equipment UE has a signal receiver, a speed display, and a power status display. The signal receiver is adapted to receive the information transmitted from the wireless communication module 90. The speed display is adapted to receive the wheel speed or the pedaling rate calculated by the control unit 70 through the wireless communication module 90. The power status display is adapted to display the life or the capacity of the power module 50 through the wireless communication module 90.

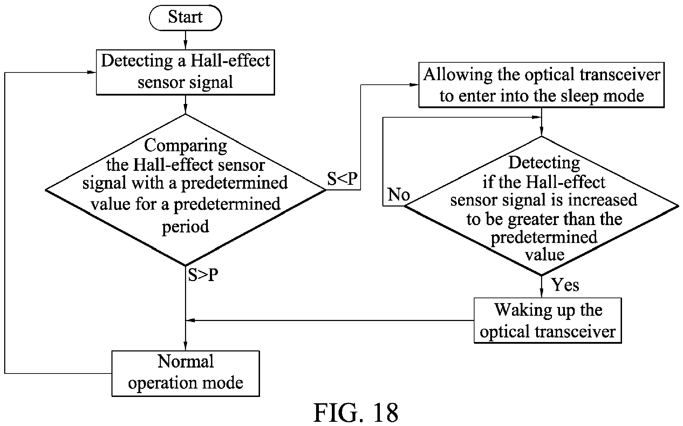

FIG. 18 is an operating flowchart of the light sensing module 800. In one embodiment, the magnetic sensor 80 is normally turned on. The control unit 70 compares the Hall-effect sensor signal S with a predetermined value P for a predetermined period. When the Hall-effect sensor signal S is kept less than the predetermined value P for a predetermined period (e.g., the Hall-effect sensor signal S is less than the predetermined value P for 3 seconds), the control unit 70 determines that the pedal B3 stops moving according to the sensation of the magnetic sensor 70. Accordingly, the control unit 70 controls the optical transceiver 20 to enter into the sleep mode.

On the other hand, when the Hall-effect sensor signal S is kept greater than the predetermined value P for a predetermined period (e.g., the Hall-effect sensor signal S is greater than the predetermined value P for 3 seconds), the control unit 70 determines that the pedal B3 stays in an active status according to the sensation of the magnetic sensor 80. Accordingly, the control unit 70 determines that the optical transceiver 20 is kept in the normal operating mode without further changing its mode state.

When the optical transceiver 20 is controlled by the control unit 70 to enter into the sleep mode, the control unit 70 still keeps measuring the Hall-effect sensor signal S of the magnetic sensor 80. If the Hall-effect sensor signal S is increased more than a predetermined value P, the control unit 70 can wake up the optical transceiver 20. Namely, in one embodiment, the control unit 70 controls the optical transceiver 20 to enter into the normal operating mode for detecting the wheel speed. On the other hand, if the Hall-effect sensor signal S is not greater than the predetermined value P, the optical transceiver 20 is kept in the sleep mode, and the control unit 70 keeps detecting the Hall-effect sensor signal S of the magnetic sensor 80.

Accordingly, the light sensing module 800 can control the operation of the optical transceiver 20 based on the magnetic signal of the magnetic sensor 80. The optical transceiver 20 is turned on upon receiving the magnetic signal generated by the magnetic sensor 80. Hence, the magnetic sensor 80 can detect the pedaling rate of the pedal B3 and wake up the optical transceiver 20 to detect the wheel speed of the rear wheel B2 when the pedal B3 is rotating.

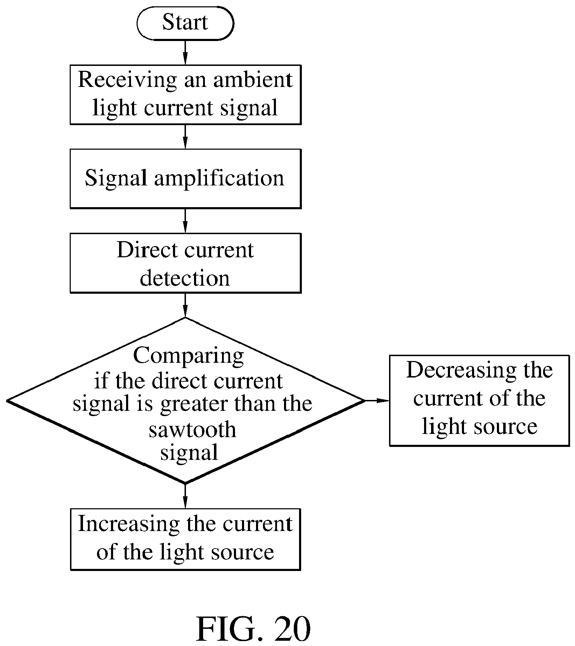

In one embodiment, the foregoing light sensing module may include a control unit 70 (please refer to the functional block diagram in FIG. 17 and the flowchart in FIG. 20), the control unit 70 can adjust the light intensity of the light of the light source 21 according to the luminance of the ambient light. Specifically, when the luminance of the light of the light source 21 is less than the luminance of the ambient light, the control unit 70 increases the driving current for the light source 21. Hence, the luminance of the light of the light source 21 can be adjusted to become greater than that of the ambient light for ensuring that the first light L1 emitted from the light source 21 and reflected by the reflector R can generate the second light L2 with a sufficient intensity. On the other hand, when the luminance of the light of the light source 21 is greater than the luminance of the ambient light, the control unit 70 can decrease the driving current for the light source 21. Hence, the luminance of the light of the light source 21 can be decreased but is still not less than the luminance of the ambient light for ensuring that the first light L1 which is emitted from the light source 21 and reflected by the reflector R can generate the second light L2 capable of being detected. Accordingly, the power consumption of the light source 21 can be improved.

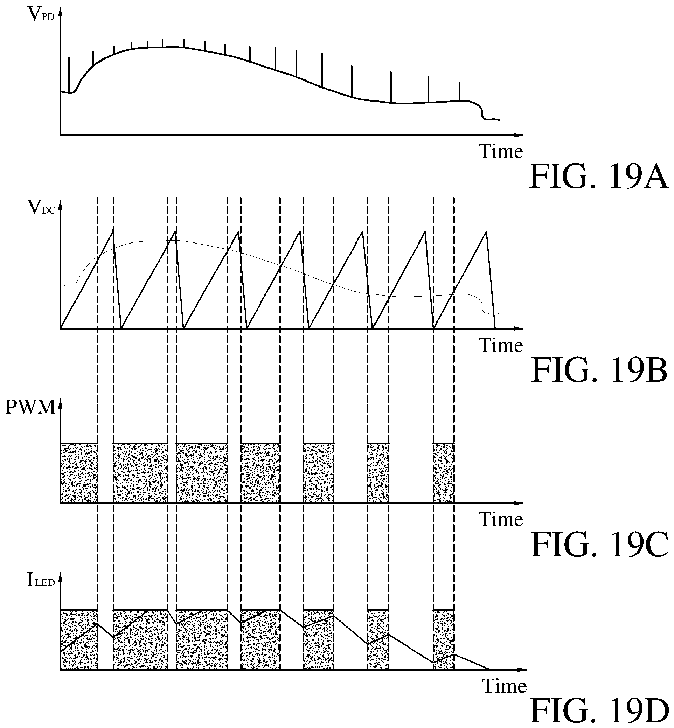

Please refer to FIG. 19A and FIG. 19B as well as FIG. 17 and FIG. 20. The light sensing module receives a direct current signal (FIG. 19A: V_{DC}) which comes from the light sensor 22 and is filtered by the low-pass filter. The direct-current signal is derived from the ambient light current signal. The ambient light current signal can be processed by the signal amplifier and the direct-current detection for transforming into the direct-current signal. The comparison circuit compares direct current signal (V_{DC}) with the predetermined sawtooth signal (FIG. 19B) and generates a pulse-width modulation (PWM) signal (FIG. 19C). When the ambient light current signal is greater than the sawtooth signal, the light intensity of the ambient light is regarded as greater than the light intensity of the light of the light source 21. The comparison circuit outputs a high voltage state, so that the light source driver increases the driving current to drive the light source 21 for increasing the light intensity of the light of the light source 21 according to the high voltage state (FIG. 19D).

On the other hand, when the ambient light current signal is less than the sawtooth signal, the light intensity of the ambient light is regarded as less than the light intensity of the light of the light source 21. The comparison circuit outputs a low voltage state, so that the light source driver can decrease the driving current for driving the light source 21 to make the light source 21 generating a first light L1 with a proper light intensity according to the low voltage state (FIG. 19D).

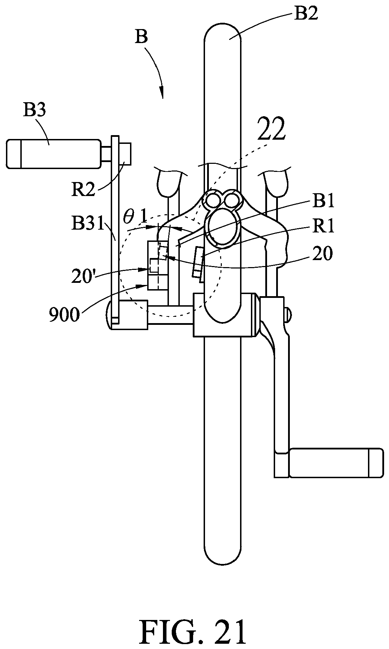

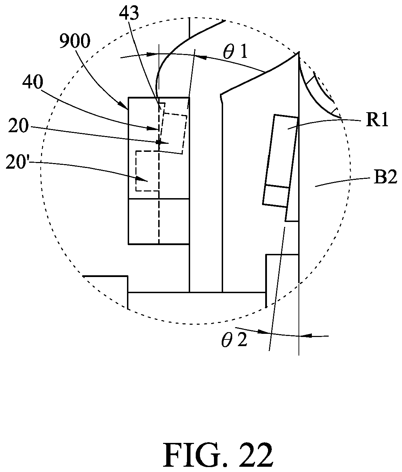

FIG. 21 is a schematic view showing a light sensing module 900 of another embodiment that is applied on a bicycle B. In order to increase the signal-to-noise ratio of the light sensing module, as shown in the light sensing module 900, the optical transceiver 20 is arranged to have an angle with respect to the substrate 40. The angle may have any value except zero degree. FIG. 22 is an enlarged partial view of the enclosed portion 22 shown in FIG. 21. As shown in the light sensing module 900, the optical transceiver 20 is adapted to detect the wheel speed of the rear wheel B2. The optical transceiver 20 has a first angle θ1 with respect to the substrate 40, and the first reflector R1 which is fixed on the rear wheel B2 has a second angle θ2 with respect to the rear wheel B2. The light path of the light emitted from the light source 21 of the optical transceiver 20 can be kept to reach the first reflector R1, so the first angle θ1 is equal to the second angle θ2. The first angle θ1 and the second angle θ2 may have any value except zero degree. Specifically, forming an angle between the optical transceiver 20 and the substrate 40, a socket 43 is disposed on the substrate 40. One surface of the socket 43 is flatly attached to the substrate 40, an opposite surface of the socket 43 has the first angle θ1 with respect to the substrate 40 and is connected to the optical transceiver 20. In one embodiment, the surface of the socket 43 flatly attached to the substrate 40 is electrically connected to the substrate 40, and the surface of the socket 43 connected to the optical transceiver 20 is electrically connected to the optical transceiver 20. Accordingly, with the socket 43, the optical transceiver 20 is electrically connected to the substrate 40 by an angle.

The optical transceiver 20 is arranged in a configuration of having the first angle θ1 with respect to the substrate 40, which makes the light emitted from the light source 21 of the optical transceiver 20 moving toward the ground. Therefore, the light sensor 22 also faces the ground to receive the light reflected by the first reflector R1. Accordingly, the amount of the ambient light (such as, sun light, car light, billboard light, and traffic light) entering into the optical transceiver 20 can be reduced, the signal-to-noise ratio of the optical transceiver 20 and the sensing accuracy can be improved. In one embodiment, the angle between the optical transceiver 20 and the substrate 40 is preferably greater than 15 degrees and less than 30 degrees.

In another embodiment, because the rider of the bicycle B steps on the pedal B3, the foot can block some ambient light near the pedal B3. Hence, the optical transceiver 20' for sensing the pedaling rate of the pedal B3 is less effected by the ambient light. Namely, the optical transceiver 20' for sensing the pedaling rate is less interfered by the ambient light. Hence, the optical transceiver 20' for sensing the pedaling rate of the pedal B3 and the second reflector R2 disposed on the pedal B3 do not need to be arranged to have an angle therebetween.

In another embodiment, the foregoing embodiments of increasing the signal-to-noise ratio can be simultaneously applied to the light sensing module, such that the signal-to-noise ratio of the light sensing module can be maximized.

In another embodiment, the light sensing module is not limited to the foregoing optical transceiver 20/20' or the magnetic sensor for sensing the wheel speed or the pedaling rate, and the light sensing module can further include various kinds of sensors to provide various sensing functions. For example, the light sensing module can further include an air-quality detector and a tracking unit. Therefore, in the case that the light sensing module is applied to the bicycle, the bicycle can keep collecting the air quality information wherever it moves, and the position information can be obtained by the tracking unit. The wireless communication module can transmit the air quality information associated with the positions to a cloud database. Therefore, the bicycle riders can obtain the air quality information through the cloud database for selecting a suitable route of riding.

Moreover, the light sensing module can be utilized along with various sensors to become a bicycle power-meter by iterating the various sensing data to obtain an accurate cycling power. Furthermore, other than the equipment of the optical transceiver 20, the light sensing module can further include a wind speed sensor, a wind direction sensor, an acceleration gauge, an altitude sensor, or a combination thereof to provide different sensing functions.

While the present disclosure has been described by the way of example and in terms of the preferred embodiments, it is to be understood that the invention need not be limited to the disclosed embodiments. On the contrary, it is intended to cover various modifications and similar arrangements included within the spirit and scope of the appended claims, the scope of which should be accorded the broadest interpretation so as to encompass all such modifications and similar structures.

## Claims

1. A light sensing module adapted to be utilized along with a reflector (R), wherein the light sensing module comprises:
a housing (10) having a through hole (111);
an optical transceiver (20) comprising:
a light source (21) disposed in the housing (10) to emit a first light (LI), wherein the first light (L1) passes through the through hole (111) of the housing (10) and is reflected by the reflector (R) to become a second light (L2);
a light sensor (33) disposed in the housing (10) to receive the second light (L2); and
a separating wall (23) between the light source (21) and the light sensor (22); and
a shading hood (30) disposed on the housing (10), wherein the shading hood (30) has an opening (31, 31B), and the opening (31) is in a light path of the second light (L2).

2. The light sensing module according to claim 1, wherein the shading hood (30) comprises a first opening (31A), and the first opening (31A) is in a light path of the first light (L1).

3. The light sensing module according to claim 2, wherein the shading hood (30) comprises a first guiding surface (34) surrounding the first opening (31A), and an extension direction of the first guiding surface (34) is parallel to a light path direction of the first light (L1).

4. The light sensing module according to claim 2, wherein the shading hood (30) comprises a second guiding surface (35) surrounding the opening (31, 31B), and an extension direction of the second guiding surface (35) is parallel to a light path direction of the second light (L2).

5. The light sensing module according to one of the preceding claims, wherein the optical transceiver (20) comprises a container (24), and both, the light source (21) and the light sensor (22) are disposed in the container (24).

6. The light sensing module according to claim 5, wherein the optical transceiver (20) comprises a sealing cap (25) disposed on the container (24) to close the container (24), and the sealing cap (25) is made of a light transmissive material.

7. The light sensing module according to claim 6, wherein the sealing cap (25) is a lens.

8. The light sensing module according to one of the preceding claims, further comprising an optical filter (F) between the light sensor (22) and the opening (31).

9. The light sensing module according to claim 8, wherein a surface of the light sensor (22) facing the opening (31) comprises an optical microstructure (M).

10. The light sensing module according to one of the preceding claims and being adapted to be disposed on a frame (B1) of a bicycle (B),
wherein a rear wheel (B2) and a pedal (B3) of the bicycle (B) respectively comprises the reflector (R1, R2), wherein the housing (10) being disposed on a chain stay (B11),
wherein the light sensing module further comprises:
a substrate (40) disposed in the housing (10), wherein the substrate (40) has a first side (41) and a second side (42) opposite to the first side (41), the first side (41) faces the rear wheel (B2), and the second side (42) faces the pedal (B3);
two optical transceivers (20, 20') respectively connected to the first side (41) and the second side (42) of the substrate (40), wherein each of the optical transceivers (20, 20') comprises:
the light source (21) disposed in the housing (10) to emit the first light (L1), wherein the first light (L1) passes through the through hole (111) of the housing (10) and is reflected by the corresponding reflector (R, R') to become the second light (L2);
the light sensor (22) disposed in the housing (10) to receive the second light (L2); and
the separating wall (23) between the light source (21) and the light sensor (22); and
two shading hoods (30, 30'disposed on the housing (10), wherein each of the shading hoods (30, 30') has the opening (31), and the opening (31) of each of the shading hoods (30, 30') is in the light path of the second light (L2) of the corresponding optical transceiver (20, 20').

11. The light sensing module according to claim 10, wherein each of the openings (31) of the two shading hoods (30, 30') comprises a first opening (31A) and a second opening (31B), the first opening (31A) of each of the shading hoods (30, 30') is in the light path of the first light (L1) of the corresponding optical transceiver (20, 20'), and the second opening (31B) of each of the shading hoods (30, 30') is in the light path of the second light (L2) of the corresponding optical transceiver (30, 30').

12. The light sensing module according to claim 10 or 11, wherein the first side (41) of the optical transceiver (30, 30') and the substrate (40) are disposed at an angle.

13. The light sensing module according to one of the claims 10 to 12, further comprising a sub-sensor (60) and a control unit (70), wherein the sub-sensor (60) and the control unit (70) are electrically connected to the substrate (40) and electrically connected to the two optical transceivers (20, 20'), respectively, and the control unit (70) is configured to control the two optical transceivers (20, 20') to operate or not according to sensing of the sub-sensor (60).

14. The light sensing module according to claim 13, wherein the sub-sensor (60) is a magnetic sensor (80), a vibration sensor, or a motion sensor.

15. The light sensing module according to one of the claims 11 to 14, wherein each of the shading hoods (30, 30') further comprises the first guiding surface (34) surrounding the first opening (31A), and the extension direction of the first guiding surface (34) is parallel to the light path direction of the first light (L1) of the corresponding optical transceiver (30, 30') and/or
wherein each of the shading hoods (30, 30') further comprises the second guiding surface (35) surrounding the second opening (31, 31B), and the extension direction of the second guiding surface (35) is parallel to the light path direction of the second light (L2) of the corresponding optical transceiver (30, 30').
